# EUROPEAN PATENT APPLICATION

(11) **EP 3 536 994 A1**
(43) Date of publication of application: **11.09.2019**
(21) Application number: 19464003.3
(22) Date of filing: 28.02.2019
(51) Int. Cl.: F16C 25/04, F16C 25/08, F16C 35/02, F16C 35/073, F16C 3/02

(54) **THERMOMECHANICAL SAFETY LOCK**

(30) Priority: 07.03.2018 RO 201800158
(71) Applicant: Stefan cel Mare University of Suceava, 720229 Suceava, County Suceava (RO)
(72) Inventor: NITAN, Ilie, jud. Suceava (RO); MILICI LAURENTIU, Dan, jud. Suceava (RO); POIENAR, Mihaela, jud. Suceava (RO); PENTIUC, Gheorghe, jud. Suceava (RO); SABADAS, Anna, Chisinau (MD); MILICI RODICA, Mariana, jud. Suceava (RO); IRIMIA, Daniela, jud. Suceava (RO); BOBRIC CRENGUTA, Elena, jud. Suceava (RO); RATA, Gabriela, jud. Suceava (RO); OLARIU, Elena Daniela, jud. Suceava (RO)

(57) **Abstract**

Thermomechanical safety lock, according to the invention, is mounted on a shaft (1) on which is fastened an actuating element (2) by means of a shaft safety ring (3), consisting essentially of two channels (6) (6'), diametrically opposed, practiced on shaft (1) in axial direction in which two thermo-bimetallic elements (7), (7') are fixed rigidly at one end by means of two bolts (8), (8') and (9), (9') and which, during operation, when the temperature increases provides additional locking.

## Description

The invention relates to a thermomechanical safety lock with bimetallic blades and intended for the protection of mechanical gears of the shaft type - drive system (wheel) subjected to heating (dilatation).

In order to achieve the blocking of the drive system on a shaft, a solution is known (CONSTANTIN, V., PALADE, V. Machine parts and mechanisms, Volume 2, Mechanical transmission, University of "Dunarea de Jos" - Galati, 2005), constituted mainly from an elastic safety ring that has the role of fixing a wheel on a shaft that drives the whole system.

The disadvantages of the solution are related to the fact that the safety ring to an excessive increase in temperature can deform, break, or may jump out of the recess, thus causing oscillations of the drive system (the wheel) on the shaft on which it is fixed or even its displacement on the shaft.

The technical problem solved by the invention consists in the use of thermo-bimetallic elements in order to prevent the wheel from moving on the axle at the time of temperature rise and the occurrence of problems with the elastic safety ring.

According to the invention, the thermomechanical safety lock eliminates the disadvantages represented by the fact that it consists mainly of thermo-bimetallic elements fixed to the shaft, which undergoes thermal deformation and is fixing the mechanical gear.

The invention has the following advantages:
- constructive simplicity;
- ease gear assembly / disassembly;
- high operating safety at high temperatures.

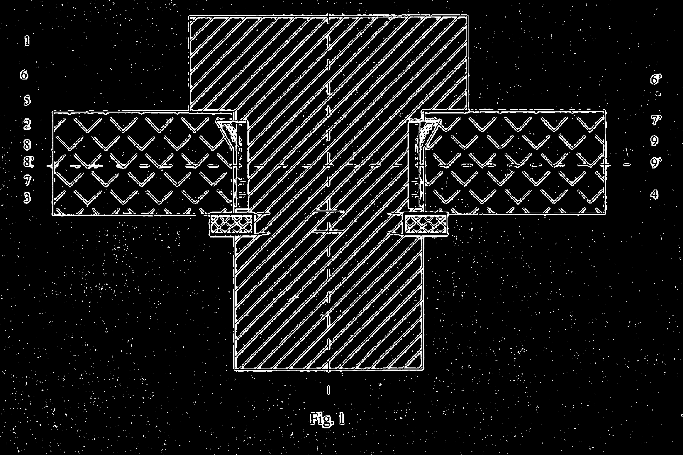

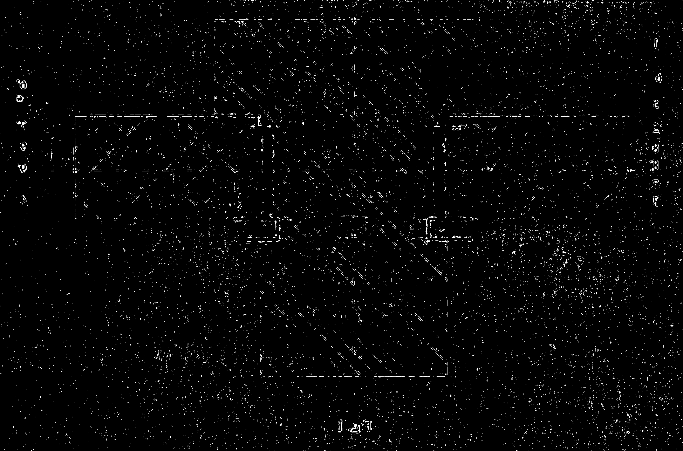

An embodiment of the invention will now be described with reference to Figure 1 which represents the longitudinal section through the shaft drive - actuator (wheel) with two thermomechanical safety locks.

Thermomechanical safety lock (Fig. 1), according to the invention comprises a shaft 1 on which is fixed at one end of an actuating element (wheel) 2 through the elastic safety ring for shafts 3, placed on the shaft 1 inside a groove 4. The wheel 2 is provided with a circular recess 5. The shaft is provided with two diametrically opposed grooves 6, 6' practiced in axial direction, similar to a notching in which are rigidly fixed at one end the thermo-bimetallic elements 7, 7' by means of two bolts 8, 8' and 9, 9 '.

During operation, when the temperature increases, the free ends of the thermo-bimetallic elements 7, 7' curve out of the shaft grooves 6, 6' from the wheel circular recess 5 and thus provide additional locking of the actuating element when the mechanical system undergoes excessive heating.

The thermomechanical safety lock according to the invention can be reproduced with the same characteristics and performances whenever necessary, which is an argument in favour of respecting the industrial applicability criterion.

### References

[1]. CONSTANTIN, V., PALADE, V. *Machine parts and mechanisms, Volume 2, Mechanical transmission,* University of "Dunarea de Jos" - Gala 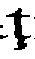 i, 2005.

## Claims

1. Thermomechanical safety lock **characterized in that** it is mounted on a shaft (1) on which is fastened on an actuating element (2) by means of a shaft safety ring (3), constituted essentially of two channels (6), (6'), diametrically opposed, practiced on shaft (1) in axial direction in which two thermo-bimetallic elements (7), (7') are fixed rigidly at one end by means of two bolts (8), (8') and (9), (9') and which, during operation, when the temperature increases, curves the free ends emerging from the shaft channels (6), (6') in the circular opening (5) of the actuating element and thus provide additional locking.
